# EUROPEAN PATENT SPECIFICATION

(11) **EP 0 995 032 B1**
(45) Date of publication and mention of the grant of the patent: **19.11.2003**
(21) Application number: 98939027.3
(22) Date of filing: 06.07.1998
(51) Int. Cl.: F03B 17/06, F03B 13/12

(54) **STREAM TURBINE**
TURBINE FÜR MEERESSTRÖMUNGEN
TURBINE POUR COURANT MARIN

(30) Priority: 07.07.1997 NO 973136
(43) Date of publication of application: 26.04.2000
(73) Proprietor: Sinvent AS, 7034 Trondheim (NO)
(72) Inventor: CARSTENS, Torkild, N-7021 Trondheim (NO); SPIDSÖE, Nils, N-7022 Trondheim (NO)
(74) Representative: Dealtry, Brian
(86) International application number: NO9800202
(87) International publication number: WO99002853

(56) References cited:
- US-A- 2 730 631
- US-A- 3 922 012
- US-A- 4 301 377
- US-A- 4 383 182
- US-A- 4 748 808
- US-A- 4 864 152

## Description

The present invention relates to a stream turbine or a stream turbine plant provided to be positioned in straits and other sea areas with one way or two ways tidal stream, to transform kinetic energy of the water stream into a more easily transferable form of energy, e.g. hydraulic or electrical energy. More specifically, the invention relates to a stream turbine as stated in the introductory part of claim 1.

### Background

Since ancient times, efforts have been made to exploit kinetic energy of streaming water in rivers and seas. It was early proposed to immerse water wheels from floats or barges, to utilize the rotational energy to operate mills. Propellers arranged on a small electric generator are submersed from leisure boats to generate electrical power.

Several efforts have been made to place permanent stream turbines on the sea bed. From EUR-report 16683 EN published 1996 it is known to place towers with various propellers or other stream turbines in water systems. Such arrangements have been to expensive with current alternative energy costs.

It is also known to use a foil or wing with elongated holding means for propellers extending sidewards on one edge, said foils being placed in a water stream. This is intended only for a unidirectional stream.

A seaturbine having the features of the pre-characterising portion of claim 1 is known from the patent specification US-A-4,748,808.

### Objects

The main purpose of the invention is to provide a stream turbine dimensioned to cover large areas of water streams, which suitably can be manufactured on e.g. ship yards and which easily can be transported to a site of use and be anchored there. It should be submersible and have least possible towering parts. Further, it should be relocalizable and be towable to the shore for maintenance and repair. Alternatively, vital parts should be accessible on site for maintenance. It should have reasonable costs and sufficient working life.

### Invention

The invention is stated in claim 1. With such a stream turbine or stream turbine plant, large straits and similar sea areas may be covered with energy transformers. It may be sized for large area of stream, though being easily transferable to a site, generally as a barge, the anchoring means being simple. A stream turbine according to the invention can be effectively module built as module units and be adapted to different sites. It may be kept clear of ship traffic and being adjustable to cover the areas under the ships zone having the largest tidal stream. It can be positioned close to the sea bed.

A particular advantage of the stream turbine of the invention is its ability to function regardless of sea depth. By suitable anchoring, it is possible to localize the stream turbin according to the invention close to the surface of deep straits and near the bottom of shallow waters.

Additional features of the invention are stated in claims 2-11. Below, the invention is described more detailed with reference to various embodiments.

### Example

The invention is illustrated in the drawings, wherein
Fig. 1 shows a perspective view of a strait with a power plant with a stream turbine according to the invention in a first embodiment,
Fig. 2 shows a partly sectional side view of the main element of the stream turbine of fig. 1,
Fig. 3-5 shows schematically various alternatives to the embodiment of Fig. 2, while
Fig. 6 shows a partly sectional side view of an alternative stream turbine.

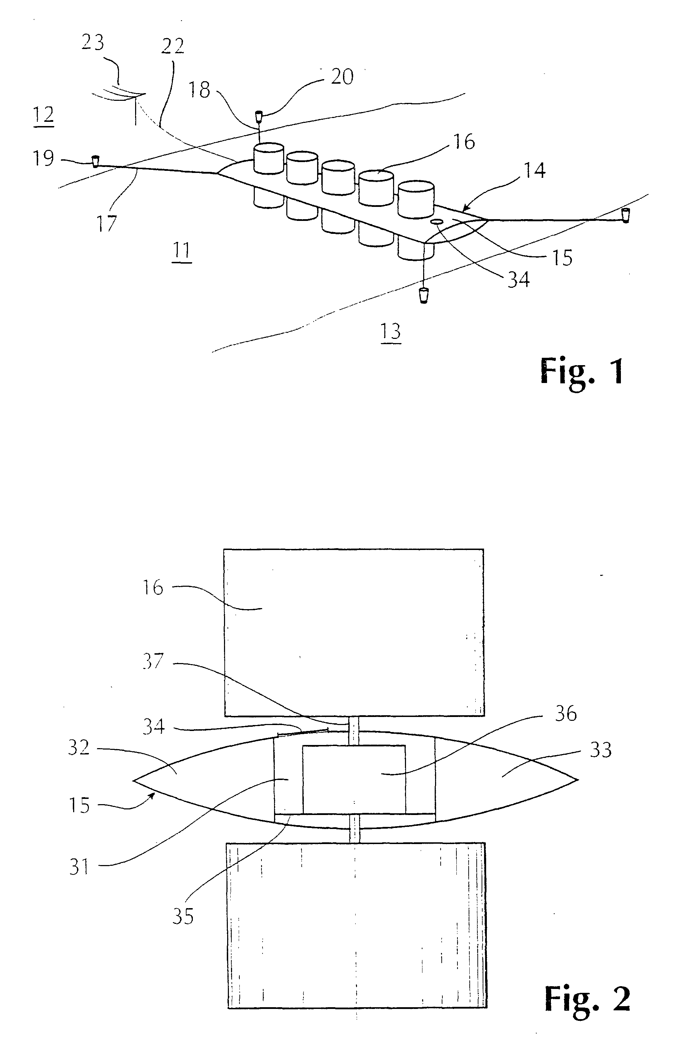

In Fig. 1 is shown a strait 11 between two shores 12 and 13 with a changing stream due to tidal forces. Submerged in the strait 11 is a stream turbine, i.e. a plant 14 for converting the kinetic energy of the moving water. The stream turbine 14 of the example comprises an elongated carrier or beam 15 enclosing converters described below. The carrier 15, which is shown in section in Fig. 2, has the form of a symmetrical wing, with upper and lower partly flat, partly curved surfaces, which wing is positioned mainly in a horizontal plane. Distributed along the carrier 15 of the example is five pairs of water wheels 16. In the example, cylindrical waterwheels, e.g. Darrieus- or Voith-wheels, are used with a vertical axis. To indicate the size, the water wheels of the example may have a diameter of 12 metre and a length of 12 metre, while the wing can have a height of 4 metre and a width of 25 metre.

In the example of Fig. 1, the carrier 15 is anchored across the strait 11 by two anchoring wires 17 and 18, which are inclined relatively to the direction of the strait 11 to land anchors 19, 20. The anchors 19 and 20 may suitably be winches operated on the locating and relocating of the stream turbine as described below. By means of the wires 17 and 18 the stream turbine can be immersed to a depth in the strait clear of any ship traffic. It is also possible in shallow waters to operate the winches to lower and lift the carrier 15 cyclically or temporarily to exploit the stream optimal and to allow ship traffic , e.g. by lowering the stream turbine when a ship is passing. It is also possible to arrange stream turbines to provide a ships channel or course and to arrange "stream turbine walls" comprising several modulized stream turbine units, as described below. The distribution of the stream from the surface to deeper layers will govern the design.

The carrier 15 comprises one or more energy converters as described below. The converted energy may be transferred by a cable 22 to a power net 23 or through a hydraulic pipe powering a hydraulic motor operating an electrical power generator.

In Fig. 2 a section of the stream turbine of Fig. 1 is shown. The carrier 15 has a centrally located engine compartment 31 and a ballast compartment 32, 33 at each side. The engine compartment can be accessible from the upper side for inspection, maintenance and repair through a hatch 34 arranged at the end. This design requires the stream turbine to be lifted to surface position to use the hatch 34. Alternatively it may have the form of a tubular shaft extending like a chimney from the carrier 15 or comprise a lock accessible for a diver.

The engine compartment 31 has a flooring 35 carrying a rotational converter 36, e. g. a hydraulic pump or an electric generator. The rotational converter 36 has a shaft extending through the converter to carry two coaxial water wheels 16 with an upper shaft 37 and a lower shaft 38 which are entered into the engine compartment through sealing boxes (not shown). The engine compartment may include equipment needed for converting the rotational energy of the shaft, in a common compartment or in a compartment for each water wheel or pair of water wheels. The engine compartment may have atmospheric pressure or a pressure corresponding to the water pressure.

The ballast compartments 32, 33 may be emptied in known manner to have a positive buoyancy, e.g. for towing the stream turbine from a building site to a site of operation or for lifting it from a position of use to a position of maintenance. Filling of the ballast compartments will correspondingly give a negative buoyancy and let the stream turbine sink.

In the example of Fig. 1, the stream turbine has a negative buoyancy and will be suspended in the pair of wires 17 and 18. An alternative embodiment has anchoring of the wires at the sea bed, requiring positive buoyancy of the stream turbine after positioning, and thus being forced downward by the anchoring wires. This arrangement requires divers or anchoring wires guided on the sea bed, being guided to a winch on the shore.

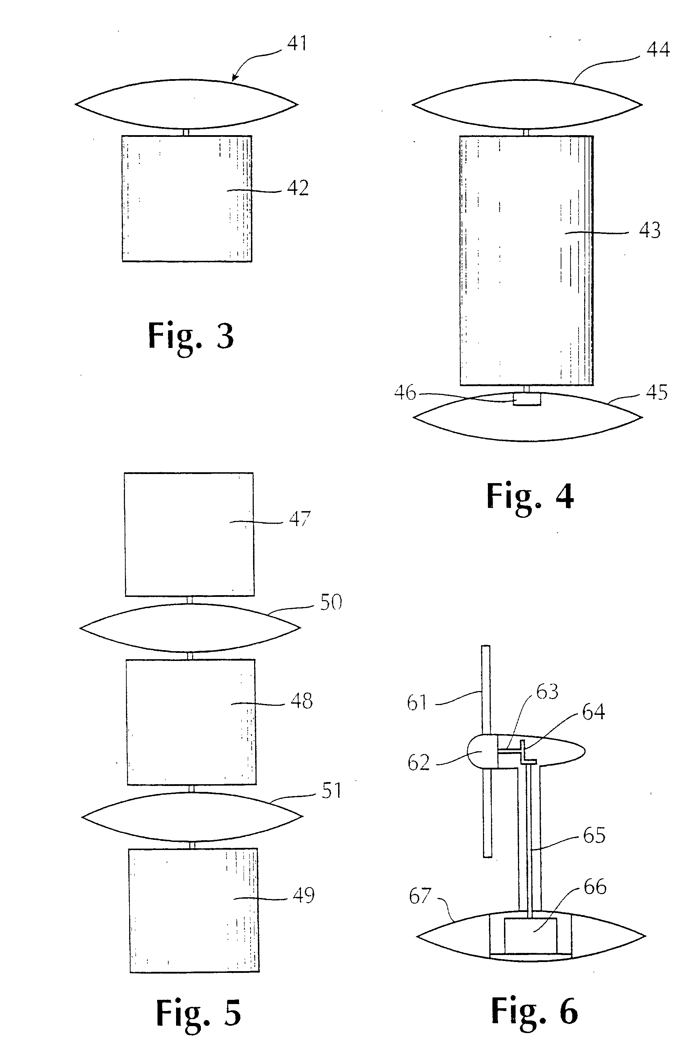

In Fig. 3 a simplified embodiment of the stream turbine of Fig. 2 is shown, with a water wheel 42 only on the lower side of the carrier 41, alternatively only on the upper side.

In Fig. 4 an alternative is shown, with the water wheel 43 between two wing shaped carriers 44, 45, the shaft of the water wheel 43 has a link 46 attached to the lower carrier 45 allowing a certain pivoting. In this case, the water wheel 43 may be substantially longer than in the previous examples.

In Fig. 5 a further alternative is shown, with three rows of water wheels 47, 48, 49 which are arranged stacked with an upper carrier 50 and a lower carrier 51. This arrangement will not allow the entrance into the lower carrier without diving equipment. But this arrangement will allow the covering of a larger area with one unit. This stream turbine may be towed to the site of usage in a turned down position and then turned 90° in the water by suitably ballasting of the carriers 50 and 51.

The invention can be realized with different configurations of carriers and water wheels, the water wheels being for axial stream or radial stream. In Fig. 6 an alternative stream turbine is shown, with a water propeller 61 with a hub 62 on a horizontal shaft 63 with a drive gear 64 linked to a vertical drive 65 connected to a power converter 66 in the carrier 67. In all cases an energy converter can be arranged on each shaft, or multiple turbine shafts can operate a common converter shaft (not shown) with only one power converter for each plant. It is possible to anchor the carrier 15 with wires running up to a sea shore attachment or down to a sea bed anchor. But it is also possible to arrange the stream turbine according to the invention on one or more towers on the sea bed, by controlling lines or anchoring wires.

Additionally is combination with other plants and structures possible. It is e.g. possible to arrange a stream turbin according to the invention on a submersed tunnel bridge, on a submersed water pipe or similar structure.

The stream turbine according to the invention may be arrange deliberately in the water. Small areas are required on the sea bed or on the surface. In narrow straits a shore based anchoring may be preferred. The carrier should then have a submersed weight which is sufficient to give stability. In open waters the carrier should be anchored at the sea bed, with sufficient buoyancy. The anchoring systems can be based on prior art technology. In granular masses, poles are submersed with suction pumps or jet dredging. In rock holes are drilled to cement wires being prestressed against rigid discs on the sea bed.

The stream turbine according to the invention can be unmanned, but accessible for maintenance and repair. It can be floated to the surface to make access through a common hatch, or by using a shaft or a diver with a lock. It can also be used an inclined tunnel from the sea shore, arranged in or on the shore, with a flexible attachment to the carrier.

The carrier with water wheels can be premade in a ship yard or other industry and be towed to the site of use. Alternatively it can have its own propulsion, e.g. a motor powering one or more of the water wheels or a particular propeller, to be moved on its own along a water system. On the site of use, several units can be joined or individually deployed. The deployment may require a step by step maneuver, lowering the carrier by ballasting, being joined to sea shore or sea bed anchoring lines. One or more winches may be used for adjusting the position.

In reversing streams, which are the most interesting sites, the placing will most easily be done at the tidal current change. By removing, e.g. for repair at shore or overhauling, the described process is reversed.

The water wheels with shafts and converting equipment can be made as units to be replaceably arranged in recesses or holes in the carrier, for easy maintenance and repair on shore. The holes in the carrier can be square or circular. The units can be connected to a common electrical/hydraulical system to transfer the energy to the shore and transfer control signals from the shore.

When supporting the water wheel shafts in both ends to reduce the shaft tension, one of the carriers, e.g. the lower, can be a simple framework, e.g. with legs to the sea bed.

The water wheels can be arranged mutually close to cover a larger total area than the exposed area.

## Claims

1. Seaturbine with a carrier (15) which is provided to be anchored in a water stream and which is provided with a water wheel (16) with a vertical axis of rotation, said carrier (15) having a section lengthwise to the water stream, which is generally symmetrically pointed in both directions, with the axis of the water wheel centrally located, with energy transformers (36) located in the interior of the the carrier to transform the rotational energy of the water wheel to a transferable form of energy, e.g. electrical or hydraulical, **characterized in that** the carrier (15) has the shape of an isometrical wing, with two or more water wheels (16) adjacently arranged , which carrier anchored in a water stream is arranged horizontally in the water stream, crosswise to the direction of flow, the energy transformers (36) of the separate water wheels being connectable to transfer the energy to a place of consumption.

2. Seaturbine according to claim 1,
**characterized in that** additionally to a main carrier (44) it comprises a corrspondingly designed supplemental carrier (45), the water wheels (43) being arranged between said carriers (44, 45), and the joumaling of the water wheels in one of the carriers (45) preferably being twistable.

3. Sea turbine according to claim 1,
**characterized in that** the carrier is a completely or partly submerged tubular bridge.

4. Sea turbine according to claim 1 or 2,
**characterized in that** it is provided with propulsion means for moving the sea turbine at sea, e.g. a motor for powering one or more water wheels or a propeller.

5. Sea turbine according to one of the claims 1-3,
**characterized in that** the carrier is provided to be lowered on one or more towers erected at the sea bed.

6. Sea turbine according to one of the claims 1-5,
**characterized in that** the carrier (15) is elongated and has pointed edges.

7. Sea turbine according to one of the claims 1-6,
**characterized in that** the carrier (15) has inside compartments (31) for a common converting shaft or for generators or hydraulic pumps for converting of the energy to a power net.

8. Sea turbine according to claim 7,
**characterized in that** the inside compartment (31) of the carrier has atmospheric pressure or a pressure corresponding to the water pressure.

9. Sea turbine according to claim 8,
**characterized in that** the carrier (15) is provided with a hatch (34), a shaft or a lock, to make the inside compartment (31) accessible.

10. Sea turbine according to one of the claims 1-9,
**characterized in that** the carrier is a completely or partly submerged tubular bridge.

11. Sea turbine according to one of the claims 1-10,
**characterized in that** it is provided with propulsion means for moving the sea turbine at sea, e.g. a motor for powering one or more water wheels or a propeller.

## Patentansprüche

1. Meeresturbine mit einem Träger (15), der dafür ausgelegt ist, in einem Wasserlauf verankert zu werden, und mit einem Wasserrad (16) mit einer vertikalen Drehachse versehen ist, wobei der Träger (15) einen in Längsrichtung zum Wasserlauf verlaufenden Abschnitt aufweist, der in beide Richtungen im Wesentlichen symmetrisch spritz zuläuft, wobei die Achse des Wasserrades mittig angeordnet ist und wobei sich Energieumwandler (36) im Inneren des Trägers befinden, um die Rotationsenergie des Wasserrades in eine übertragbare Energieform, z.B. elektrische oder hydraulische, umzuwandeln,
**dadurch gekennzeichnet, dass** der Träger (15) die Gestalt eines isometrischen Flügels mit zwei oder mehr benachbart zueinander angeordneten Wasserrädern (16) hat, welcher in einem Wasserlauf verankerte Träger horizontal im Wasserlauf, quer zur Strömungsrichtung angeordnet ist, wobei die Energieumwandler (36) des separaten Wasserrades anschließbar sind, um die Energie zu einem Verbrauchsort zu übertragen.

2. Meeresturbine nach Anspruch 1,
**dadurch gekennzeichnet, dass** sie zusätzlich zu einem Hauptträger (44) einen entsprechend ausgeführten Zusatzträger (45) umfasst, wobei die Wasserräder (43) zwischen den Trägern (44, 45) angeordnet sind und die Wasserräder in einem der Träger (45) bevorzugt drehbar gelagert sind.

3. Meeresturbine nach Anspruch 1,
**dadurch gekennzeichnet, dass** der Träger eine vollständig oder teilweise versenkte Röhrenbrücke ist.

4. Meeresturbine nach Anspruch 1 oder 2,
**dadurch gekennzeichnet, dass** sie mit Antriebseinrichtungen ausgestattet ist, um die Meeresturbine im Meer zu bewegen, z.B. einem Motor zum Antreiben eines oder mehrerer Wasserräder oder eines Propellers.

5. Meeresturbine nach einem der Ansprüche 1-3,
**dadurch gekennzeichnet, dass** der Träger dafür ausgelegt ist, an einem oder mehreren auf dem Meeresboden errichteten Türmen abgesenkt zu werden.

6. Meeresturbine nach einem der Ansprüche 1-5,
**dadurch gekennzeichnet, dass** der Träger (15) länglich ist und zugespitzte Enden aufweist.

7. Meeresturbine nach einem der Ansprüche 1-6,
**dadurch gekennzeichnet, dass** der Träger (15) innere Kammern (31) für eine gemeinsame Umwandlerwelle oder für Generatoren oder Hydraulikpumpen zum Umwandeln der Energie für ein Stromnetz aufweist.

8. Meeresturbine nach Anspruch 7,
**dadurch gekennzeichnet, dass** die innere Kammer (31) des Trägers Atmosphärendruck oder einen dem Wasserdruck entsprechenden Druck aufweist.

9. Meeresturbine nach Anspruch 8,
**dadurch gekennzeichnet, dass** der Träger (15) mit einer Luke (34), einem Schacht oder einer Schleuse versehen ist, um Zugang zur inneren Kammer (31) bereitzustellen.

10. Meeresturbine nach einem der Ansprüche 1-9,
**dadurch gekennzeichnet, dass** der Träger eine vollständig oder teilweise versenkte Röhrenbrücke ist.

11. Meeresturbine nach einem der Ansprüche 1-10,
**dadurch gekennzeichnet, dass** sie mit Antriebseinrichtungen ausgestattet ist, um die Meeresturbine im Meer zu bewegen, z.B. einem Motor zum Antreiben eines oder mehrerer Wasserräder oder eines Propellers.

## Revendications

1. Turbine marine comprenant un support (15) qui est aménagé de manière à être ancré dans un courant d'eau et qui comporte une roue hydraulique (16) ayant un axe de rotation vertical, ledit support (15) comprenant une section dans le sens de la longueur du courant d'eau, qui est de manière générale dirigée symétriquement dans les deux directions, l'axe de la roue hydraulique étant positionné de manière centrale, avec des transformateurs d'énergie (36) disposés à l'intérieur du support afin de transformer l'énergie rotative de la roue hydraulique sous une forme d'énergie de transfert, par exemple électrique ou hydraulique, **caractérisée en ce que** le support (15) a une forme d'aile isométrique avec deux roues hydrauliques (16) ou davantage disposées de manière adjacente, le support étant ancré dans un courant d'eau et étant disposé horizontalement dans le courant d'eau, transversalement à la direction du flux, les transformateurs d'énergie (36) des roues hydrauliques séparées pouvant être connectés afin de transférer l'énergie à un lieu de consommation.

2. Turbine marine selon la revendication 1, **caractérisée en ce que**, en complément à un support principal (44), elle comprend un support supplémentaire (45) conçu en correspondance, les roues hydrauliques (43) étant disposées entre lesdits supports (44, 45), et la portée des roues hydrauliques dans l'un des supports (45) étant de préférence en torsion.

3. Turbine marine selon la revendication 1, **caractérisée en ce que** le support est un pont tubulaire immergé en totalité ou en partie.

4. Turbine marine selon la revendication 1 ou la revendication 2, **caractérisée en ce qu'**il est prévu des moyens de propulsion destinés à déplacer la turbine marine sur la mer, par exemple un moteur destiné à actionner une ou plusieurs roues hydrauliques ou une hélice.

5. Turbine marine selon l'une des revendications 1 à 3, **caractérisée en ce que** le support est aménagé de manière à s'abaisser sur une ou plusieurs tours érigées sur le fond marin.

6. Turbine marine selon l'une des revendications 1 à 5, **caractérisée en ce que** le support (15) est allongé et comporte des bords en pointe.

7. Turbine marine selon l'une des revendications 1 à 6, **caractérisée en ce que** le support (15) comprend des compartiments internes (31) destinés à un arbre de conversion commun ou à des générateurs ou à des pompes hydrauliques afin de convertir l'énergie en un réseau de puissance.

8. Turbine marine selon la revendication 7, **caractérisée en ce que** le compartiment interne (31) du support est sous pression atmosphérique ou sous une pression qui correspond à la pression de l'eau.

9. Turbine marine selon la revendication 8, **caractérisée en ce que** le support (15) comporte une trappe (34), un axe ou un verrou, afin de rendre accessible le compartiment interne (31).

10. Turbine marine selon l'une des revendications 1 à 9, **caractérisée en ce que** le support est un pont tubulaire immergé en totalité ou en partie.

11. Turbine marine selon l'une des revendications 1 à 10, **caractérisée en ce qu'**il est fourni des moyens de propulsion destinés à déplacer la turbine marine sur la mer, par exemple un moteur destiné à actionner une ou plusieurs roues hydrauliques ou une hélice.
